# EUROPEAN PATENT APPLICATION

(11) **EP 2 754 643 A1**
(43) Date of publication of application: **16.07.2014**
(21) Application number: 13196163.3
(22) Date of filing: 09.12.2013
(51) Int. Cl.: C02F 1/44, C02F 1/02, B01D 61/14, B01D 65/04, B01D 63/06, C02F 103/00

(54) **Waste water filtering system and a method for filtering waste water**

(30) Priority: 10.01.2013 FI 20135032
(71) Applicant: Rate International Oy, 02920 Espoo (FI)
(72) Inventor: Korppoo, Seppo Ilmari, 02920 Espoo (FI)
(74) Representative: Kolster Oy Ab

(57) **Abstract**

The invention relates to a waste water filtering system (2) for a transportation vehicle using a sanitary vacuum system having a connection with a waste water storage tank (1) into which waste water is conducted, said waste water storage tank (1) having a connection with the waste water filtering system (2). The waste water filtering system (2) comprises a filter (3), means for circulating waste water (8) between the waste water storage tank (1) and the waste water filtering system (2) and through the filter (3), and mechanical means for cleaning (4) the filter (3) comprising a cleaning element (5) and a collecting element (6).

## Description

### FIELD OF THE INVENTION

The present invention relates to a waste water filtering system for a transportation vehicle using a sanitary vacuum system for collecting dirty water from various sources such as toilet units, urinals, sinks, shower modules, washing machines, food processing or the like, and more particularly to waste water filtering system as defined in the preamble of independent claim 1. The present invention further relates to a method for filtering waste water in a transport vehicle using a sanitary vacuum system as defined in the preamble of independent claim 12.

The present invention relates to a waste water filtering system and a method for filtering waste water out from waste water storage tanks used for holding waste water, i.e. dirty water, originating for example from toilet units, urinals, sinks, shower modules, washing machines, food processing or the like in transportation vehicles. In this context, transportation vehicles are for instance trains, ships, boats, floating housing units, barges, submarines, underwater mobile work stations, busses, mobile sanitation, housing or service units and aeroplanes. Words dirty water, sewage water and waste water mean in this context the same and while claims are directed to waste water they also cover dirty water and sewage water and the like.

### BACKGROUND OF THE INVENTION

Dirty water storage tanks are widely used for example in many means of transportation such as trains, aeroplanes, ships, boats, busses or the like. For example in a train passenger coach about 300 litres of sewage water may be generated in a day and the coach is therefore fitted with a storage tank of typically about 300 to 1000 litres at maximum due to size and weight limitations. This means that the storage tank has to be evacuated in every two or three days. Presently the sewage water from the storage tank is evacuated and transported to a water treatment plant. The washing water and other sanitary water from sinks and showers or the like in a transport vehicle may also be collected to the same or a separate storage tank, or it may be discarded to the railway track, to a surrounding water area, or other suitable place in the nature as such without any treatment or purification.

One of the disadvantages associated with the above prior art sewage water systems is that the storage tank into which sewage water is conducted and stored has to be evacuated often. The evacuation has to be done even more often if also the washing water or the like from other water sources is conducted and stored into the same storage tank. This frequent evacuation need is a problem especially during long travelling times or transportation distances. Furthermore the frequent evacuation need means that evacuation has to be arranged at almost every station, which considerably adds the service and infrastructure costs at the stations.

These frequent evacuations of the sewage water storage tanks are economically not reasonable and sometimes evacuation may even be impossible, which means that toilets are out of use. The limited size and volume of the storage tank often means that the washing water and sanitary water from sinks and showers or the like cannot be stored into the sewage water storage tank. Therefore this washing water is discarded from the transport vehicle to the nature as such. This means that a pollution load is directed straight to the nature. Environmental requirements for transportation vehicles are at the same time tightened and in many cases it is not possible to discard washing water as such into the nature and thus it has to be stored into a large size storage tank. Environmental requirements for sewage water are even tighter. It is also known that carrying large volumes of dirty water in transport vehicles, for instance in aeroplanes, causes additional fuel costs and increases the cost of the aeroplane due to the need of a large tank.

Currently there are several known systems where dirty water is treated in situ, instead of being stored in a storage tank or transported to another location for treatment. Such state-of-the-art methods are based on biological, chemical or filtration technologies or their combinations. However, these methods have several disadvantages when used in transportation vehicles. Biological methods are expensive, of complex construction, have a large weight and volume, and are very sensitive to load variations, which often occur in transportation vehicles. Chemical methods have many of the same disadvantages as the biological ones and in addition they require a constant supply of chemicals. These methods have high power consumption.

In the context of this invention state-of-the-art water filtration systems are based on various porous filtration materials. In these methods pressure is used to separate the small water molecules by forcing them throng small pores in the filtration material, while larger particles, such as bacteria and viruses and others stay on the pressure side. These methods are sensitive to fouling of the filtering material, which is a considerable disadvantage. In state-of-the-art solutions the fowling is typically removed by complex chemical cleaning procedures.

### BRIEF DESCRIPTION OF THE INVENTION

An object of the present invention is thus to provide a waste water filtering system and a method for filtering waste water so as to overcome or at least to alleviate the above disadvantages. The objects of the invention are achieved by a waste water filtering system and a method for filtering waste water, which are characterized by what is stated in the independent claims. The preferred embodiments of the invention are disclosed in the dependent claims.

The invention is based on the idea of circulating waste water in a waste water filtering system and filtering said waste water such that it is cleaned enough to be released to the nature or it is recirculated and used again in the transportation vehicle. According to the present invention waste water is cleaned by filtering said waste water to a sufficient cleanliness level cost efficiently for allowing discharging the filtered waste water into the nature, or in some cases in which a more stricter cleanliness level is required the filtered water may further be treated by prior art methods to the required cleanliness level. Alternatively the filtered water can be reused for instance in toilet flushing. These advantages give considerable cost, weight and space savings by for instance extending the evacuation frequency of the storage tank and in infrastructure costs of railway stations and airports. The recirculation of the filtered water offers considerable advantages due to the fact that the size of fresh water storage tank and water usage in the transportation vehicle will be reduced accordingly.

One advantage of the system and method of the invention is that in the case of a typical train sewage storage tank, since it contains about 95% of water, by using the method for filtering waste water, time between evacuations of the waste water storage tank can be considerably extended from the present 3 days to even about 30 days. Such an extension is sufficient to allow the coach to travel to any destination and back to its home depot, where the storage tank can then be evacuated in advantageous conditions during normal coach maintenance and cleaning work. This offers significant time and cost savings in operating of the coach, as well as savings in infrastructure and operating costs of train stations, which do not need costly tank evacuation and fresh water filling systems. Comparable savings can also be achieved when servicing airplanes at airports and busses at bus stations.

Due to its small size and low energy consumption a waste water filtering system built according to the present invention can easily be fitted into tank structures in existing transportation vehicles or placed in another available small space. Such waste water filtering systems can be advantageously used also in new vehicles.

### BRIEF DESCRIPTION OF THE DRAWINGS

In the following the invention will be described in greater detail by means of preferred embodiments with reference to the attached drawings, in which
Figure 1 shows a waste water filtering system according to the invention; and
Figure 2 shows a detail of the waste water filtering system shown in figure 1.

### DETAILED DESCRIPTION OF THE INVENTION

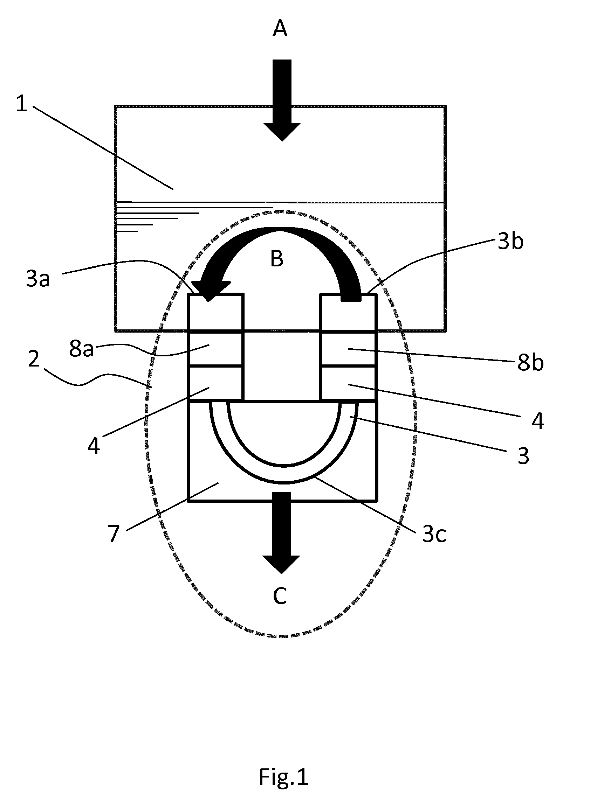

Figure 1 shows a waste water filtering system 2 according to the invention. The waste water filtering system 2 for a transportation vehicle using a sanitary vacuum system consisting of one or more vacuum toilet units is suitably used in trains, airplanes, buses or other transportation vehicles. The sanitary vacuum system has a connection with a waste water storage tank 1 into which waste water is conducted from said sanitary vacuum system. In figure 1 letter A indicates the entrance of waste water from the sanitary vacuum system to the waste water storage tank 1. The waste water storage tank 1 has a connection with the waste water filtering system 2 into which waste water is conducted from said waste water storage tank 1. The waste water filtering system 2 comprises a filter 3, means for circulating waste water between the waste water storage tank 1 and the waste water filtering system 2 and through the filter 3, and mechanical means for cleaning the filter 3. The filter 3 comprises a first flow connection 3a with the waste water storage tank 1 and a second flow connection 3b with the waste water storage tank 1 and a filtering section 3c between the first flow connection 3a and the second flow connection 3b. The filtering section 3c has a porous wall for filtering at least part of said waste water conducted from the waste water storage tank 1. The filter 3 preferably comprises a tube-like filter body. While waste water is conducted from the waste water storage tank 1 to the waste water filtering system 2 it contains a lot of various waste particles which have to be filtered from the waste water before it can be released to the nature or used again for example in flushing toilets. The various waste particles are therefore filtered in the filtering section 3c comprising porous filtration materials. These materials serve as physical barriers that permit passage for particles of certain size, shape or character. So the filtering section 3c preferably comprises an ultra-filtration porous material for separating water molecules and smaller particles from the waste water. While waste water is filtrated through the porous walls of the tube-like filter body in the filtering section 3c the waste remains in the inner side of the tube-like filter body. Because of the waste accumulating to the inner surface of the tube-like filter body the filtering gradually becomes inefficient and the surface has to be cleaned by mechanical means for cleaning 4 the filter 3. The mechanical means for cleaning 4 the filter 3 comprises a cleaning element 5 and a collecting element 6. The cleaning element 5 is adapted to be movable back and forth inside the filter body and adapted to be captured by the collecting element 6 arranged in the waste water filtering system.

The method for filtering waste water in a transport vehicle using a sanitary vacuum system, in which the sanitary vacuum system has a connection with the waste water storage tank 1 into which waste water is conducted from said sanitary vacuum system and in which said waste water storage tank 1 has a connection with the waste water filtering system 2 into which waste water is conducted from said waste water storage tank 1, the waste water filtering system 2 comprises a filter 3 which said filter 3 comprises a tube-like filter body having a first flow connection 3a with the waste water storage tank 1 and a second flow connection 3b with the waste water storage tank 1, and a filtering section 3c between the first flow connection 3a and the second flow connection 3b. In figure 1 letter A indicates waste water entering from the sanitary vacuum system to the waste water storage tank 1. The method comprises the steps of arranging a first pump for circulating waste water in a first flowing direction between the waste water storage tank 1 and the waste water filtering system 2 and through the filter 3; arranging waste water to go through the filtering section 6 in the first flowing direction by means of the first pump for filtering at least part of said waste water conducted from the waste water storage tank 1; and cleaning the filtering section 6 by arranging mechanical means for cleaning 4 the filter 3 inside said filter 3, said mechanical means comprising a cleaning element 5 and a collecting element 6, said cleaning element 5 moving inside the filter body with waste water to the same flowing direction as said waste water and being captured by the collecting element 6 arranged inside said filter body. In figure 1 letter B indicates the circulation of waste water in the first flowing direction between the waste water storage tank 1 and the waste water filtering system 2. Part of said waste water entering the water filtering system 2 from the waste water storage tank 1 is returned back to the waste water storage tank 1. This is the part of waste water which is not filtered through the filtering section 3c.

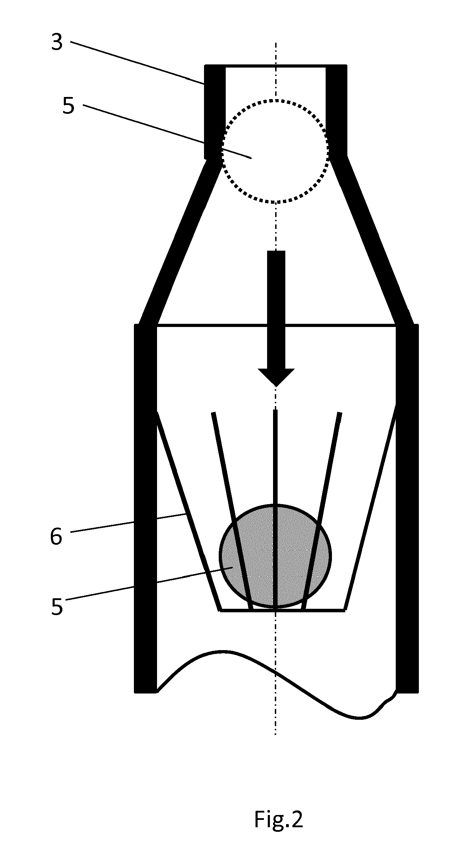

In a preferred embodiment of the invention waste water is filtered out from the waste water storage tank 1 through the following steps as subsequently described. Waste water enters the waste water filtering system 2 through a first connection 3a between the waste water storage tank 1 and the waste water filtering system 2 which is at the same time the first flow connection 3a between the tube-like filter body of the filter 3 and the waste water storage tank 1. Preferably but not necessarily the connection 3a comprises a screen arranged to cover the connection and comprising several small holes or other suitable openings such that larger particles are prevented from entering the waste water filtering system. In other words the waste water filtering system 2 further comprises a first screen arranged in the first connection 3a and/or a second screen arranged in the second connection 3b, said first and/or second screen being arranged to pre-filter said waste water before going into the waste water filtering system 2.The system comprises means for pressurising waste water arranged to pressurise waste water before flowing through the filtering section 3c. In other words waste water is then sucked with a first pump 8a such that waste water is pressurised in the waste water filtering system 2 by a said pump. As the waste water filtering system comprises the mechanical means for cleaning 4 the filter 3 which comprises a cleaning element 5 and a collecting element 6 said waste water is further directed to the tube-like filter body through a first collector element 6 comprising the cleaning element 5. The collecting element 6 has housing capable of allowing waste water to pass it through and capable of retaining the cleaning element 5. Said collector element 6 is preferably a wire basket or similar which captures the cleaning element 5, preferably a ball, but allows waste water flow to pass freely around the ball and through the collector element 6. The mechanical means for cleaning 4 the filter 3 is described in more detail in connection with figure 2. The waste water filtering system comprises two collecting elements 6 arranged at a distance from each other in the filter body such that the cleaning element 5 can be movable between the two collecting elements 6. While the first flow connection 3a and the second flow connection 3b are outlets from the waste water filtering system 2, or in other words from the filter 3, to the waste water storage tank 1 and the filtering section 3c is not in contact with the outlets the first collector element 6 is arranged in an area between the first flow connection 3a and the filtering section 3c and the second collector element 6 is arranged in an area between the second flow connection 3b and the filtering section 3c. In other words the two collecting elements 6 are arranged at a distance from each other in the filter body such that the filtering section 3c is at least partly between said two collecting elements 6. The two collecting elements 6 are arranged in the filter 3 such that the cleaning element 5 may move in the filter body and be captured in one end by the first collecting element 6 and in the other end by the second collecting element 6. When the cleaning element 5 is parked in the first collecting element, the waste water flow coming from the waste water storage tank 1 to the waste water filtering system 2 through the first flow connection 3a in a first flow direction pushes the cleaning element 5 to the filtering section 3c. The cleaning element 5 cleans the inner surface of the tube-like filtering section 3c while waste water passes through the filter 3 and pushes it toward the second collecting element 6 where it is parked until the next cleaning cycle. Waste water passes through the filter 3 while cross-wall pressure causes part of said waste water to filter through the porous walls of the filtering section 3c into a filtrate tank 7. In other words the waste water filtering system 2 further comprises a filtrate tank 7, into which said filtered waste water is arranged to go from the filtering section 3c through the porous wall, said filtering section 3c having a connection with the filtrate tank 7 through said porous wall. The part of said waste water which is not filtered through the filtering section 3c to the filtrate tank 7 is returned to the waste water storage tank 1 after going through the collecting element 6 and a second pump 8b which is not operating at that time and through the second flow connection 3b preferably comprising a screen. The cleaning of the filtering section is arranged in cleaning cycles such that when the waste water flow direction is reversed the first waste water flow pushes the cleaning element 5 toward the other collecting element 6 in which the cleaning element 5 stays until the next reversal in which the waste water flow is reversed to the opposite direction and the first waste water flow of said newly reversed flow pushes the cleaning element 5 to the other collecting element 6. The waste water filtering system 2 comprises preferably two pumps, a first pump 8a and a second pump 8b. The first pump 8a is arranged between the first flow connection 3a and the filtering section 3c and the second pump 8b is arranged between the filtering section 3c and the second flow connection 3b. The waste water in the first flow direction, i.e. flow coming through the first flow connection 3a into the filter 3, is reversed by stopping the first pump 8a and starting the second pump 8b, such that waste water is sucked into the filter 3 from the waste water storage tank 1 through the second flow connection 3b. The cleaning element 5 is then again pushed through the filtering section 3c and holes of the screen in the first flow connection 3a are cleaned from larger particles by the return flow. The waste water flow direction is periodically reversed resulting in repeated cleaning cycles of the porous filtering section and keeping the small holes in the first and second flow connection 3a, 3b open. Waste water is circulated through the filter 3 by the means for circulating waste water between the waste water storage tank 1 and the waste water filtering system 2 which preferably comprises a pump. The means for circulating waste water between the waste water storage tank 1 and the waste water filtering system 2 further comprises plurality of valves for controlling the flowing direction of waste water between the first flow connection 3a and the second flow connection 3b. Said valves are turnable between a first position where said waste water is allowed to pass from the waste water storage tank 1 to the waste water filter system 2 through a first flow connection 3a and a second position where said waste water is allowed to pass from the waste water storage tank 1 to the waste water filter system 2 through the second flow connection 3b. In other words the method for filtering waste water comprises the step of controlling the flowing direction of said waste water in the waste water filtering system 2 by means of at least one valve such that the flowing direction from the waste water storage tank 1 into the waste water filtering system 2 through the filter 3 can be changed between the first flowing direction and a second flowing direction such that in the first flowing direction waste water is allowed to enter the filter 3 through the first flow connection 3a and in the second flowing direction waste water is allowed to enter the filter through the second flow connection 3b.

In another embodiment of the invention the means for circulating waste water between the waste water storage tank 1 and the waste water filtering system 2 comprises two low cost standard pumps arranged such that the flowing direction of waste water through the filter body between the first flow connection 3a and the second flow connection 3b can be changed. In other words the method for filtering waste water comprises the step of arranging a second pump for circulating waste water in a second flowing direction between the waste water storage tank 1 and the waste water filtering system 2 and through the filter 3, said second flowing direction being opposite to the first flowing direction. The reversal of flow direction, i.e. changing the flowing direction of waste water through the filter 3, is arranged by stopping the first pump and starting the second pump. In other words the method for filtering waste water comprises the step of arranging waste water to go through the filtering section 3c in the first flowing direction by means of said first pump such that the first pump is arranged to pump waste water from the waste water storage tank 1 to the waste water filtering system 2 through the first flow connection 3a, changing the flowing direction by stopping the first pump and starting the second pump and arranging waste water to go through the filtering section 3c in the second flowing direction by means of the second pump such that the second pump is arranged to pump waste water from the waste water storage tank 1 to the waste water filtering system 2 through the second flow connection 3b. This advantageous arrangement causes simultaneous cleaning of the filter 3 and removing of blockages of small holes in the first and the second flow connection 3a, 3b by starting and stopping the two pumps.

Figure 2 shows schematically the functioning steps of mechanical means for cleaning 4 the filter 3. As the figure 2 shows the cleaning element 5 is preferably a ball. The ball is preferably made of spongy material and the diameter of the ball 5 is substantially the same as the diameter of the tube-like filter body. The place for the collecting element 6 has preferably a larger diameter than the filtering section so as the waste water which has not been filtered out from the filter 3 can go through the cleaning element 3 while it is captured by the collecting element 6. As illustrated in figure 2 waste water flow enters the collecting element 6 through the porous tube-like filter 3. The cleaning element 5, i.e. the ball, is pushed by overpressure through the porous tube-like filter 3 (ball is illustrated as dashed line in this position) and enters the collecting element 6, i.e. the wire basket. Flow carries the ball into a wire basket where it is guided to be parked, allowing the waste water flow to pass freely around the ball. When the waste water flow direction is reversed, the pressure caused by the flow pushes ball back to the tube-like filter wherefrom it is further pushed through filtering section 3c (not shown in the figure). The waste water pressurizer may be a standard centrifugal pump, powered by an electric motor.

Due to the fact that ultrafiltration has removed all larger than water molecule-sized particles, prior art activated carbon filters or other methods can be advantageously used as second stage water cleaners in order to increase filtrate cleanliness. Alternatively, in order to increase the cleanliness of the filtered water, prior art porous materials, with smaller pores than in the ultra-filter, are preferred in the tube-like filter body in such cases when the resulting increase in power consumption is not a limiting factor.

In order to increase waste water filtration rates, cross wall pressure of the filter body can be increased by use of larger pressure in the pressurizer or by use of vacuum in the filtrate tank. Vacuum can also be used to cause reverse flushing through the porous filtering section 3c wall, thereby augmenting cleaning efficiency. The function of the cleaning element 5 is to mechanically clean the fouling accumulating on the inner surface of the porous filtering section 3c. The cleaning element may be of various alternative constructions, such as being one or more soft rubber sponge balls or similar. The cleaning element may also be constructed of flexible round scraper-disks, attached by a central flexible cord, or of an articulated construction made of two or more spherical or cylindrical scraper sections. For effective mechanical cleaning action, depending on its material and construction, the diameter of the cleaning element may be suitably larger than the porous filter body diameter, but not excessively so, to allow efficient passing through the porous filtering section due to overpressure generated by the pressurizer. The collecting element functions as a parking place for the cleaning element after it has passed through the porous filtering section. It may be a truncated cone-shaped basket made of small diameter metal wires. The inner dimensions of basket are suitably larger than the ball in order to avoid ball being stuck in the basket due to friction and solid particles in the dirty water. The basket is located in a suitably larger diameter pipe than the ball diameter. When the ball comes from the direction of the porous filtering section, the basket wires direct the ball to be loosely parked in the basket. Water can then freely pass around the ball. Due to the wire basket being made of only a few small diameter wires, when flow direction is reversed, then the ball is exposed to the pressure caused by the reverse flow, causing it to exit the wire-basket, after which it is pushed through the porous filtering section into the other collecting element, at the other end of the filtering section. It is obvious that the collecting element may be designed also in various other ways and according the construction of the cleaning element. For instance the cleaning element may be partially made of materials which are affected by magnetic forces, thereby allowing the movements of the cleaning element to be controlled by the use of outside of pipe electromagnets.

By the use of a microprocessor controller the functions of the waste water filtering system can be freely controlled and optimized. For instance the filtrate tank 7 and other parts of the waste water filtering system may be equipped with sensors for monitoring the water filtering rate and so that frequency of cleaning cycles may be increased or decreased according to fouling rate of the porous filtering section, or if excessive blockages of small holes in the flow connections are experienced. For optimal power consumption suitable insulation materials, heat exchangers as well as vacuum and overpressure methods can be used.

As the filtration system is operating in a sewage water environment containing various bacteria and viruses, any part of the filtering system may be contaminated by them. In order to prevent contaminated filtered water from exiting from the filtering system 2, state-of-the-art sterilization means, such as for instance a high temperature may be used. In other words the waste water filtering system 2 further comprises means for sterilizing filtrate water C coming out from the filter 3, said filtrate water C being waste water that is filtered through the filtering section 3c. The waste water filtering system further comprises a heat exchanger for recovering the heat from filtrate water sterilization. So the method for filtering waste water comprises a step of sterilizing filtrate water C coming out from the filter 3, said filtrate water C being waste water that is filtered through the filtering section 3c.

The waste water filtering system 2 and/or its part may be made as a modular construction unit thereby allowing the removal of the waste water filtering system and/or its part for efficient inspection, service and repair, as well as for the replacement of a fouled or worn-out part. So the waste water filtering system 2 or a part of it is a modular unit for allowing the removal and/or the replacement of the waste water filtering system 2 or part of it.

While the mechanical cleaning method is the primary means of cleaning of the fouled surface of the filtration material, the cleaning process can be augmented by other present art methods in the transportation vehicle, or at another location such as the train service depot.

It will be obvious to a person skilled in the art that, as the technology advances, the inventive concept can be implemented in various ways. The invention and its embodiments are not limited to the examples described above but may vary within the scope of the claims.

## Claims

1. A waste water filtering system (2) for a transportation vehicle using a sanitary vacuum system, said sanitary vacuum system having a connection with a waste water storage tank (1) into which waste water is conducted from said sanitary vacuum system, said waste water storage tank (1) having a connection with the waste water filtering system (2) into which waste water is conducted from said waste water storage tank (1), **characterized in that** the waste water filtering system (2) comprising:
- a filter (3) comprising a first flow connection (3a) with the waste water storage tank (1) and a second flow connection (3b) with the waste water storage tank (1) and a filtering section (3c) between the first flow connection (3a) and the second flow connection (3b), said filtering section (3c) having a porous wall for filtering at least part of said waste water conducted from the waste water storage tank (1),
- means for circulating waste water (8) between the waste water storage tank (1) and the waste water filtering system (2) and through the filter (3), and
- mechanical means for cleaning (4) the filter (3) comprising a cleaning element (5) and a collecting element (6), said cleaning element (5) being adapted to be movable back and forth inside the filter (3) and adapted to be captured by the collecting element (6) arranged in the waste water filtering system (2).

2. The waste water filtering system (2) according to claim 1, **characterized in that** the filtering section (3c) comprises a tube-like filter body comprising ultra-filtration porous material for separating water from the waste water.

3. The waste water filtering system (2) according to any previous claim, **characterized in that** the waste water filtering system (2) further comprising a filtrate tank (7), into which said filtered waste water is arranged to go from the filtering section (3c) through the porous wall, said filtering section (3c) having a connection with the filtrate tank (7) through said porous wall.

4. The waste water filtering system (2) according to any previous claim, **characterized in that** the means for circulating waste water between the waste water storage tank (1) and the waste water filtering system (2) comprises a pump (8a, 8b) arranged to pressurise waste water before flowing through the filtering section (3c).

5. The waste water filtering system (2) according to claim 4, **characterized in that** means for circulating waste water between the waste water storage tank (1) and the waste water filtering system (2) further comprises plurality of valves for controlling the flowing direction of waste water between the first flow connection (3a) and the second flow connection (3b).

6. The waste water filtering system (2) according to claim 5, **characterized in that** said valves are turnable between a first position where said waste water is allowed to pass from the waste water storage tank (1) to the waste water filter system (2) through a first flow connection (3a) and a second position where said waste water is allowed to pass from the waste water storage tank (1) to the waste water filter system (2) through the second flow connection (3b).

7. The waste water filtering system (2) according to any previous claim, **characterized in that** the means for circulating waste water between the waste water storage tank (1) and the waste water filtering system (2), comprises two pumps (8a, 8b) arranged such that the flowing direction of waste water through the filter body between the first flow connection (3a) and the second flow connection (3b) can be changed.

8. The waste water filtering system (2) according to any previous claim, **characterized in that** the waste water filtering system (2) further comprising a first screen arranged in the first connection (3a) and/or a second screen arranged in the second connection (3b), said first and/or second screen being arranged to pre-filter said waste water before going into the waste water filtering system (2).

9. The waste water filtering system (2) according to any previous claim, **characterized in that** the waste water filtering system (2) further comprising means for sterilizing filtrate water (C) coming out from the filter (3), said filtrate water (C) being waste water that is filtered through the filtering section (3c).

10. The waste water filtering system (2) according to claim 9, **characterized in that** the waste water filtering system (2) further comprising a heat exchanger for recovering the heat from the sterilization of said filtrate water.

11. The waste water filtering system (2) according to any previous claim, **characterized in that** the waste water filtering system (2) or a part of it is a modular unit for allowing the removal and/or the replacement of the waste water filtering system (2) or part of it.

12. A method for filtering waste water in a transport vehicle using a sanitary vacuum system, said sanitary vacuum system having a connection with a waste water storage tank (1) into which waste water is conducted from said sanitary vacuum system, said waste water storage tank (1) having a connection with a waste water filtering system (2) into which waste water is conducted from said waste water storage tank (1), **characterized in that** said waste water filtering system (2) comprising a filter (3) which said filter (3) comprising a tube-like filter body having a first flow connection (3a) with the waste water storage tank (1) and a second flow connection (3b) with the waste water storage tank (1), and a filtering section (3c) between the first flow connection (3a) and the second flow connection (3b), the method comprising the steps of:
- arranging a first pump for circulating waste water in a first flowing direction between the waste water storage tank (1) and the waste water filtering system (2) and through the filter (3) and pressurising waste water before flowing through the filtering section (3c),
- arranging waste water to go through the filtering section (3c) in the first flowing direction by means of the first pump for filtering at least part of said waste water conducted from the waste water storage tank (1), and
- cleaning the filtering section (3c) by arranging mechanical means for cleaning (4) the filter (3) inside said filter (3), said mechanical means comprising a cleaning element (5) and a collecting element (6), said cleaning element (5) moving inside the filter body with waste water to the same flowing direction as said waste water and being captured by the collecting element (6) arranged inside said filter body.

13. The method according to claim 12, **characterized in that** the method further comprises the step of:
- arranging a second pump (8b) for circulating waste water in a second flowing direction between the waste water storage tank (1) and the waste water filtering system (2) and through the filter (3), and pressurising waste water before flowing through the filtering section (3c), said second flowing direction being opposite to the first flowing direction.

14. The method according to claim 13, **characterized in that** the method further comprises the step of:
- changing the flowing direction of waste water through the filter (3) by stopping the first pump (8a), and starting the second pump (8b).

15. The method according to claim 13 or 14, **characterized by** arranging waste water to go through the filtering section (6) in the first flowing direction by means of said first pump (8a) such that the first pump (8a) is arranged to pump waste water from the waste water storage tank (1) to the waste water filtering system (2) through the first flow connection (3a), changing the flowing direction by stopping the first pump (8a) and starting the second pump (8b) and arranging waste water to go through the filtering section (6) in the second flowing direction by means of the second pump (8b) such that the second pump (8b) is arranged to pump waste water from the waste water storage tank (1) to the waste water filtering system (2) through the second flow connection (3b).

16. The method according to claim 12, **characterized in that** the method further comprises the step of controlling the flowing direction of said waste water in the waste water filtering system (2) by means of at least one valve such that the flowing direction from the waste water storage tank (1) into the waste water filtering system (2) through the filter (3) can be changed between the first flowing direction and a second flowing direction such that in the first flowing direction waste water is allowed to enter the filter (3) through the first flow connection (3a) and in the second flowing direction waste water is allowed to enter the filter through the second flow connection (3b).

17. The method according to any of claims 12 - 16, **characterized in that** the method further comprises the step of sterilising filtrate water (C) coming out from the filter (3), said filtrate water (C) being waste water that is filtered through the filtering section (3c).
